# EUROPÄISCHE PATENTSCHRIFT

(11) **EP 2 904 429 B1**
(45) Veröffentlichungstag und Bekanntmachung des Hinweises auf die Patenterteilung: **14.12.2016**
(21) Anmeldenummer: 13795155.4
(22) Anmeldetag: 02.10.2013
(51) Int. Cl.: G01V 3/10

(54) **VERFAHREN UND SENSOREINHEIT ZUR ORTUNG UND/ODER ERKENNUNG METALLISCHER ODER METALL ENTHALTENDER OBJEKTE UND MATERIALIEN**
METHOD AND SENSOR UNIT FOR LOCATING AND/OR DETECTING METALLIC OR METAL-CONTAINING OBJECTS AND MATERIALS
PROCÉDÉ ET ENSEMBLE DÉTECTEUR POUR LA LOCALISATION ET/OU LA DÉTECTION D'OBJETS ET DE MATÉRIAUX MÉTALLIQUES, OU RENFERMANT UN MÉTAL

(30) Priorität: 02.10.2012 DE 102012019329
(43) Veröffentlichungstag der Anmeldung: 12.08.2015
(73) Patentinhaber: Reime, Gerd, 77815 Bühl (DE)
(72) Erfinder: Reime, Gerd, 77815 Bühl (DE)
(74) Vertreter: Reinhardt, Harry
(86) Internationale Anmeldenummer: PCT/EP2013/002955
(87) Internationale Veröffentlichungsnummer: WO 2014/053240

(56) Entgegenhaltungen:
- EP-A2- 1 059 542
- WO-A2-2012/104086
- DE-A1-102010 005 399
- US-A- 5 729 143

## Beschreibung

Die Erfindung betrifft ein Verfahren und eine Sensoreinheit zur Ortung und/oder Erkennung metallischer oder Metall enthaltender Objekte und Materialien nach dem Oberbegriff der Ansprüche 1 oder 10.

Aus der dem Oberbegriff des Anspruches 1 zu Grunde liegenden US 5,729,143 A ist ein Verfahren zur Ortung metallischer oder Metall enthaltender Objekte und Materialien bekannt, in dem eine Spulenanordnung mit Sendespule und darüber angeordneter Empfangsspule verwendet wird. Eine geschlossene Kompensationsregelung dient der Kompensation von im Detektionsbereich der Empfangsspule auftretenden Änderungen. Dazu wird das Ausgangssignal des Vorverstärkers ausgewertet. Dabei wird ein Nulldurchgang bestimmt und demgemäß ein Korrektursignal um 180° phasenverschoben zurückgekoppelt, um die induktive Brücke zu nullen.

Die EP 1 059 542 A2 beschreibt eine Sende- und Empfangseinrichtung, wobei das Empfangene Signal mit einem Kompensationssignal verglichen wird, das aus zwei zueinander phasenverschobenen Teilkompensationssignalen gebildet ist. Das Vergleichssignal kann auf seine Amplitude als auch seine Phasenlage ausgewertet werden. Dabei wird mit zeitlich langen Integrationszeitkonstanten von 3 bis 30 Sekunden dieses Signal aufrechterhalten, damit sich zwischen dem empfangenen Signal und dem Kompensationssignal ein oszillierender Sollwert ergibt. Durch die Regelung wird erreicht, dass das Vergleichssignal eine minimale Amplitude aufweist, also nicht Null ist.

Aus der WO 2012/104086 A1 ist ein Verfahren zur Ortung metallischer oder Metall enthaltender Objekte und Materialien bekannt, in dem Ströme in mindestens zwei Sendespulen so zueinander geregelt werden, dass ein von wenigstens einer Empfangsspule empfangenes Empfangsspulenausgangssignal oder Durchschnittswerte von aus dem Empfangsspulenausgangssignal generierten Demodulationsphasen zueinander kontinuierlich, auch bei Metalleinfluss sendeseitig zu "Null" geregelt werden. Dabei werden die Regelwerte durch Demodulation wenigstens bei 0° und bei einer um 90° versetzten Demodulation als Werte erfasst und angeglichen, so dass eine zuverlässige Detektion eines zu detektieren Objekts auch dann möglich ist, wenn sich andere metallische Gegenstände im Detektionsbereich befinden.

Die ältere nachveröffentlichte deutsche Patentanmeldung DE 10 2012 001 202 A1 beschreibt einen Sensor mit einer Spulenanordnung, bei der die normalerweise kreisförmigen Windungen einer Spule so in Mäanderform ausgebildet sind, dass zwei sendende Spulen und eine Empfangsspule miteinander in der Art wirken, das sich das empfangene Signal auslöscht. Dabei ist vorzugsweise oberhalb und unterhalb der Empfangsspule je eine Sendespule angeordnet. Diese haben zur Empfangsspule hin leicht unterschiedliche Rotationswinkel, so dass über die Verteilung der Sendeströme das Signal in der Empfangsspule zu Null geregelt werden kann. Dieses Spulensystem besteht somit aus mindestens zwei, vorzugsweise drei unabhängigen Spulenteilen. Üblicherweise beginnen die Windungen der Spulen auf Grund optimaler Kontaktierbarkeit am Außenrand und werden mäanderförmig nach innen geführt. Von dort muss der Strom wieder nach außen gelangen, was durch eine zweite Lage mit mäanderförmiger Spule erfolgen kann, bei der also der Spulenstrom von innen wieder nach außen gelangt. Dies erhöht die Bauhöhe.

Aus der WO 2010/133501 A1 ist ein induktiver Sensor zur Detektion metallischer Objekte mit einer Sendespulenanordnung mit wenigstens zwei Sendespulen und wenigstens einer Empfangsspule bekannt. Über eine Auswerte- und Steuereinheit sind die Sendespulen mit Sendeströmen ansteuerbar, wobei Wicklungssinn der Sendespulen und Vorzeichen der Sendestromamplituden so gewählt sind, dass beide Sendespulen ein Magnetfeld gleicher Richtung am Ort der Empfangsspule erzeugen. Sendespulen und Empfangsspulen sind dabei geometrisch so angeordnet, dass sie sich überlappen und in der Empfangsspulenanordnung eine Spannung von Null oder nahezu Null induzieren, die Magnetfelder sich also im Wesentlichen kompensieren. Ausgehend von einem so abgeglichenen Zustand wird dann die induzierte Spannung durch ein Objekt beeinflusst, was zu einem Detektionssignal führt. Die Regelung erfolgt sendeseitig.

Aus der DE 10 2004 047 189 A1 ist ein Metallsensor für Bauwerkstoffe mit eine Sendespule und einem Empfangs-Leiterschleifensystem bekannt, die induktiv miteinander gekoppelt sind. Das Leiterschleifensystem wird durch Leiterstrukturen auf einer Leiterplatte gebildet. Da keine vollständige Kompensation erfolgt, werden die Messsignale digitalisiert und es erfolgt eine schmalbandige, digitale Filterung zur Reduzierung der Rauschbandbreite.

Aus der DE 10 2010 043 078 A1 ist eine Sensorvorrichtung als Metallsensor mit mindestens zwei Spulen und einem Magnetfeldsensor bekannt, bei der die Anordnung von Spulen und Magnetsensor zueinander bzw. die Anzahl der Spulenwindungen oder der Wicklungssinn der Spulen oder der Spulenstrom so gewählt sind, dass das von den Spulen erzeugte Magnetfeld am Ort des Magnetfeldsensors näherungsweise verschwindet.

Aus der DE 10 2005 002 238 A1 ist ein Sensor zur Ortung metallischer Objekte mit Sendespule und damit induktiv gekoppeltem Empfangsleiterschleifensystem bekannt. Die Sendespule ist in Reihe zur Primärseite eines Kompensationstransformators geschaltet. Dadurch wird ein möglichst geringes Offset-Signal erzeugt.

Zur Detektion von ferromagnetischen Stoffen ist aus der DE 44 42 441 A1 eine in Planartechnologie hergestellte miniaturisierte Anordnung zur Detektion der magnetischen Permeabilität bekannt. Die Anordnung umfasst Spulen, die einen Magnetfluss erzeugen, eine flussleitende Struktur und flussdetektierende Bauelemente. Änderungen der magnetischen Permeabilität werden durch die flussdetektierenden Bauelemente erfasst. Durch die Herstellung in Planartechnologie ist eine hohe Miniaturisierung und damit hohe Ortsauflösung erreichbar.

Aus der DE 103 18 350 B3 ist ein induktiver Näherungsschalter mit einer Sendespule und einer in deren magnetischen Wechselfeld angeordneten Empfangsspule bekannt, wobei der vom magnetischen Wechselfeld in der Empfangsspule eingeprägte magnetische Fluss in der Schalt- oder Ruhestellung des Näherungsschalters nahezu Null ist. Die Spulen sind benachbart versetzt zueinander angeordnet, sodass die Feldlinien die Spulen gegenseitig durchdringen. Eine Spule ist ringförmig, die andere kreisförmig, wobei die kreisförmige die ringförmige Spule überlappt. Durch diese Ausgestaltung ist der Schaltabstand weitestgehend unkritisch gegenüber Temperaturschwankungen und mechanischen Beeinflussungen des Spulenträgerkörpers.

Aus der DE 39 12 840 A1 ist eine Suchspulenanordnung für ein induktives Suchgerät bekannt. Durch die Verwendung gedruckter Schaltungen für die Suchspulen und die Art der Anbringung der Windungen in Form eines Leiterbandes von nebeneinander angeordneten Leiterbahnen auf einer gemeinsamen Trägerschicht werden Herstellung und Produzierbarkeit der Suchspulenanordnung gewährleistet.

Aus der DE 34 39 369 C2 ist ein Verfahren zum Detektieren von in einem Fluss einer Metallschmelze mitfließender Schlacke bekannt, wobei Sende- und Empfangsspule in keramisches Material eingebettet sind. Die Sendespule wird mit einem mehrere Frequenzen enthaltenden Strom beaufschlagt, der in der Empfangsspule eine Spannung induziert, die frequenzselektiv ausgewertet wird. Der Anteil der Schlacke wird durch den Verlauf der Leitfähigkeitsverteilung ermittelt, wobei eine kontinuierlich oder quasi kontinuierliche Messung der sich ändernden Temperatur der Schmelze als auch der Messaufnehmer durchgeführt wird.

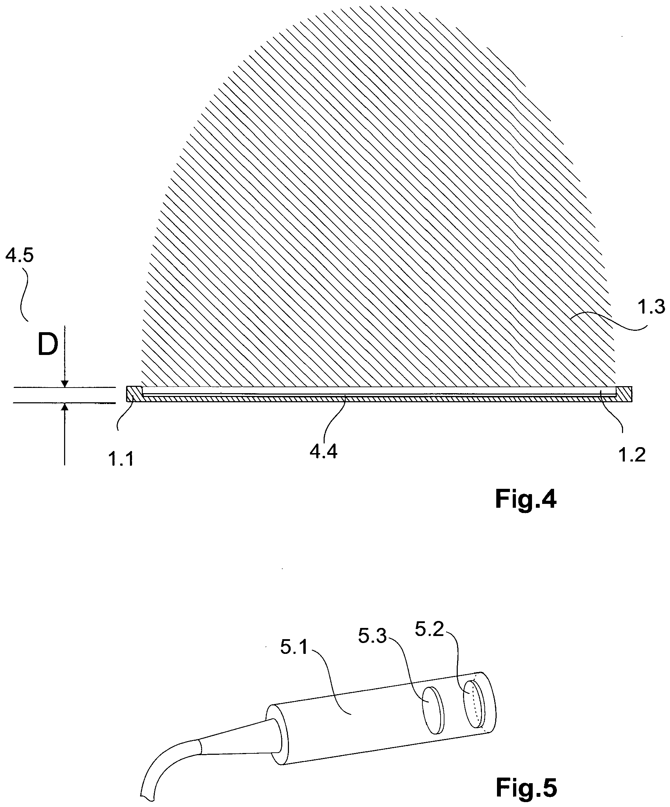

Induktive Annäherungssensoren sind ganz allgemein in großer Zahl bekannt. Der übliche Aufbau ähnelt einem Rohrabschnitt ähnlich dem Sensorelement 5.1 gemäß Fig. 5. Diese Sensoren verwenden in der Regel einen Ferritkern zur Bündelung der Feldlinien der Sensorspule. Der Einbau eines solchen Sensors erfolgt meist durch ein Loch in einer oftmals metallischen Wand. Dazu muss auch der entsprechende Platz vorhanden sein. Sensoren ohne Ferritkern können zwar eine hohe Reichweite erlangen, die unmittelbare Anwesenheit von Metall z.B. durch ein umgebendes Gehäuse macht diese Sensoren jedoch blind für eine weitere Detektion.

Quaderförmige Sensoren zur Detektion einer metallischen Annäherung können auf Oberflächen aufgeschraubt werden. Üblicherweise wird auch hier ein Ferritkern zur Bündelung der Feldlinien und Festlegung der Detektionsrichtung eingesetzt. Daher sind diese Sensoren relativ dick.

### Aufgabe der Erfindung

Hiervon ausgehend liegt der vorliegenden Erfindung die Aufgabe zu Grunde, ein Verfahren und eine Sensoreinheit zur Ortung und/oder Erkennung metallischer oder Metall enthaltender Objekte und Materialien bereit zu stellen, bei denen eine Spule mit einem ungeregelten Sendestrom verwendet wird, wobei stetig empfangsseitig ein Nullausgangssignal geschaffen wird.

Diese Aufgabe wird durch ein Verfahren mit den Merkmalen des Anspruches 1 gelöst sowie durch eine Sensoreinheit mit den Merkmalen des Anspruches 11 gelöst.

Verfahren und Sensoreinheit können mit einer Sendespule und einer Empfangsspule betrieben werden, wobei Kompensationsströme im Empfangszweig, vorzugsweise unmittelbar in die Empfangsspule eingespeist werden und so zueinander geregelt werden, dass ein von der Empfangsspule empfangenes Empfangsspulenausgangssignal kontinuierlich, auch bei Metalleinfluss, zu Null geregelt wird. Die eine Sendespule und die eine Empfangsspule sind übereinander, vorzugsweise in einer gedruckten Schaltung, angeordnet. Durch diese Vorgehensweise und die Verwendung von nur zwei Spulen ergibt sich ein induktives Sensorelement, das sehr kompakt und insbesondere in einer sehr flachen Bauform ausgeführt werden kann, so dass die baulichen Voraussetzungen für einen kompakten Aufbau einer Sensoranordnung mit einseitigen Detektionsbereich geschaffen werden. Alle Änderungen im Detektionsbereich der Empfangsspule werden damit kontinuierlich ausgeregelt, so dass auftretende Änderungen an der Empfangsspule grundsätzlich sofort kompensiert werden, Unterschiede bzw. Differenzen jedoch kontinuierlich bzw. dynamisch wahrgenommen werden. Die eine Sendespule und die eine Empfangsspule werden so betrieben, dass dennoch eine differentielle Kompensationsregelung möglich ist.

Damit können z.B. auch, aber nicht nur ferritfreie induktive Sensoren mit sehr geringer Bauhöhe und nur einseitig ausgebildetem Detektionsbereich aufgebaut werden, die auch in unmittelbarem Kontakt mit einen metallischen Umgebung eingesetzt werden können. Zudem erlaubt das Verfahren die genaue Analyse des zu detektierenden Metalls. Also nicht nur, ob es sich um Eisen- oder Nicht- Eisen handelt, sondern zum Beispiel um die Klassifizierung von Aluminiumsorten. Auch die Kontrolle von Schweißnähten ist mit diesem Verfahren und einer derartigen Sensoreinheit möglich.

Vorzugsweise können Sendespule und Empfangsspule auf einer gedruckten Platine aufgebracht sind, wobei statt des metallischen Gehäuses die Platine wenigstens eine auf einer Seite der Spulen angeordnete metallische Beschichtung aufweisen. Für die Unterbringung der für diese Sensoranordnung benötigten Elektronik im Sensorgehäuse kann eine etwas größere Dicke des Sensors angesetzt werden, jedoch würde er immer noch wesentlich unter den Dicken der im Stand der Technik produzierten Sensoren liegen. Ein weiterer Vorteil ist die sogenannte "Schweißfestigkeit", da bei der beschriebenen Erfindung vorzugsweise kein Ferrit verwendet wird und somit elektrische Felder, wie sie zum Beispiel in der Nähe von Schweißrobotern auftreten, keinen Einfluss auf die Detektionseigenschaften ausüben. So kann ein induktiver ferritfreier Sensor in Form einer flachen Platte mit z.B. nur 1,3 mm Stärke und großer Reichweite aufgebaut werden. Dabei ist das Detektionsfeld nur in eine Richtung ausgebildet. Das bedeutet, der Sensor kann auf nicht metallischem Trägermaterial als auch auf Trägermaterial aus Metall aufgebracht werden, ohne dass das Trägermaterial Einfluss auf die Ergebnisse des Sensors hat.

Vorzugsweise erfolgen zwei Kompensationsregelungen parallel, indem eine erste Kompensationsregelung eine Kompensation bei einer Phasenlage von 0° und 180° durchführt, während eine zweite Kompensationsregelung eine Kompensation bei 90° und 270° durchführt, wobei die Kompensationsregelungen zu einer Regelung des Empfangssignals in der Empfangsspule zu Null führen. Die dafür erforderlichen Regelwerte werden gleichzeitig in einer Auswerteeinheit ausgewertet. Sie können zunächst dazu verwendet werden, um den Einfluss einer metallischen Umgebung der Sensoreinheit auszublenden, sie können dann aber auch dazu verwendet werden, Gegenstände zu orten und /oder deren Metallarten zu analysieren

Ein flacher Aufbau der Sensoreinheit ergibt sich insbesondere dann, wenn Sendespule und Empfangsspule quer zur Umfangsrichtung der Spulenwindungen hin- und herlaufende, mäanderförmige Leiterwindungen sowie eine im Wesentlichen identische Bauform aufweisen, wobei Sendespule und Empfangsspule so aneinander bzw. aufeinander liegen, dass sich mehrere symmetrisch angeordnete, überlappende Bereiche ausbilden. In diesem Fall befinden sich vorzugsweise n Mäander in gleichmäßigem Zentriwinkel-Abstand entlang des Umfangs von Sendespule und Empfangsspule und die Spulen sind um einen Winkel von etwa 360°/(n * 2) verdreht zueinander angeordnet.

Die Sensoreinheit kann z.B. zur Überprüfung von Schweißnähten auch stabförmig ausgebildet sein. Sie weist eine Detektionsspule und eine Referenzspule in dem Sensorelement hintereinander liegend auf, die beide gleichzeitig senden und empfangen.

Weitere Vorteile ergeben sich aus den weiteren Unteransprüchen und der nachfolgenden Beschreibung von Ausführungsbeispielen.

Im Folgenden wird die Erfindung an Hand von in den beigefügten Figuren dargestellten Ausführungsbeispielen näher erläutert. Es zeigen:
- Fig. 1a: einen Sensor in einem metallischen Gehäuse in dreidimensionaler Darstellung,
- Fig. 1b: eine schematische Draufsicht auf die Sensorspulen des Sensors gemäß Fig. 1,
- Fig. 2: eine Schaltungsanordnung für einen Sensor gemäß Fig. 1a, 1b,
- Fig. 3: eine Schaltungsanordnung für einen Sensor gemäß Fig. 1a, 1b in einem weiteren Ausführungsbeispiel,
- Fig. 4: einen Sensor gemäß Fig. 1a im Schnitt,
- Fig. 5: ein stabförmiges Sensorsystem,
- Fig. 6: eine symbolische Darstellung der Stromeinspeisung in den Spulenanschluss der Empfangsspule,
- Fig. 7: Stromverläufe von Sendestrom und Stromeinspeisung sowie Ausgangssignal gemäß Fig. 6

### Ausführliche Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

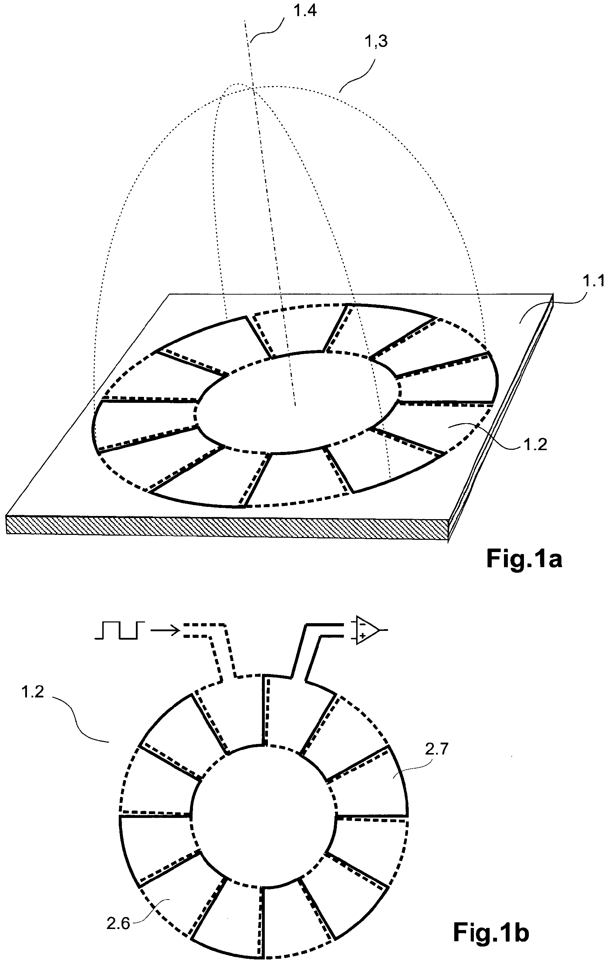

Die Figuren zeigen Ausführungsbeispiele der Spulenanordnung und der zugehörigen Schaltung für einen flachen Sensor mit den oben beschriebenen Vorteilen. Fig. 1 a zeigt einen solchen Sensor mit seinem metallischen Gehäuse 1.1 in der Perspektive. In einer metallischen Platte, z.B. aus Aluminium mit einer Kantenlänge von 50 x 50 mm, ist eine spezielle Spulenanordnung 1.2 so eingebaut, dass auf der Unterseite der Spulenanordnung z.B. noch eine Metallstärke von 0,3 mm verbleibt, wie dies im Schnitt in Fig. 4 dargestellt ist. Durch diese Spulenanordnung, auf die noch eingegangen wird, bildet sich ein symbolisch dargestellter Detektionsbereich 1.3 entlang der Mittelachse 1.4, und zwar nur in eine Richtung, in Fig. 1 a also nach oben aus. Nach unten und zur Seite hin ist der Sensor vollkommen unempfindlich gegenüber der Anwesenheit von Metall.

Das metallische Gehäuse 1.1 besitzt eine Vertiefung, in der die Spulenanordnung 1.2 eingelassen ist. Die Spulenanordnung besteht aus einer 2- bis n-lagigen gedruckten Spule, die bei üblicher Produktionstechnik bei zweilagigem Aufbau z.B. 0,3 mm stark sein kann. Vorzugsweise befindet sich zwischen der Spulenanordnung 1.2 und dem metallischen Gehäuse 1.1 ein nicht metallisches Abstandselement 4.4 mit einer Stärke von z.B. 0,6mm. Setzt man für eine Schutzschicht auf der Sensoroberfläche 0,1 mm an, so ergibt sich eine Gesamtstärke D des Sensors von 1,3 mm.

In einem weiteren Ausführungsbeispiel kann die Spulenanordnung auch ohne metallisches Gehäuse und trotzdem nur einseitiger Feldausbildung aufgebaut werden. Dazu werden an Stelle des metallischen Abstandselements 4.4 eine oder zwei weitere Kupferschichten auf der gedruckten Platine aufgebracht. Das heißt, das gesamte Sensorelement mit ausschließlich einseitig ausgeprägtem Empfindlichkeitsbereich kann aus einer gedruckten Platine mit z.B. 1 mm Stärke bestehen.

Für die Unterbringung der für diese Sensoranordnung benötigten Elektronik im Sensorgehäuse kann eine etwas größere Dicke des Sensors angesetzt werden, jedoch würde er immer noch wesentlich unter den Dicken der im Stand der Technik produzierten Sensoren liegen. Ein weiterer Vorteil ist die sogenannte "Schweißfestigkeit", da bei der beschriebenen Erfindung kein Ferrit verwendet wird und somit magnetische Felder, wie sie zum Beispiel in der Nähe von Schweißrobotern auftreten, keinen Einfluss auf die Detektionseigenschaften ausüben.

In den Ausführungsbeispielen wird eine Spulenanordnung verwendet, wie sie aus der älteren, nachveröffentlichten deutschen Patentanmeldung DE 10 2012 001 202 A1 bekannt ist. Bei dieser Spulenanordnung sind die normalerweise kreisförmigen Windungen einer Spule so in Mäanderform ausgebildet, dass zwei sendende Spulen und eine Empfangsspule miteinander in der Art wirken, dass sich das empfangene Signal auslöscht. Vorzugsweise ist oberhalb und unterhalb der Empfangsspule je eine Sendespule angeordnet. Die Sendespulen haben zur Empfangsspule hin leicht unterschiedliche Rotationswinkel, so dass über die Verteilung der Sendeströme mit in der Amplitude gegenläufig geregelten Strömen das Signal in der Empfangsspule zu Null gebracht werden kann und ein Null-Signal im Empfänger generiert wird. Der Messwert wird aus den Regelwerten gewonnen, die sich bei Metalleinfluss ändern.

Dieses Spulensystem besteht somit mindestens aus drei unabhängigen Spulenteilen. Üblicherweise beginnen die Windungen der Spulen auf Grund optimaler Kontaktierbarkeit am Außenrand und werden mäanderförmig nach innen geführt. Von dort gelangt der Strom durch eine zweite Lage mit mäanderförmigen Spulen wieder nach außen. Vorausgesetzt, man will keine Kabel von innen aus der Spule herausführen, bleibt also nur die Möglichkeit einer weiteren Ebene in der gedruckten Spule für diese Verbindung. Somit liegen also je zwei Ebenen je Spule vor, also insgesamt 6 Ebenen. Bei durchschnittlicher Fertigungstechnik entspricht dies einer Stärke der Platine von ca. 1.5 mm. Addiert man dazu ein Abstandselement mit 0.6 mm Höhe, ergibt dies eine Gesamtstärke von 2,1 mm oder mehr nur für die Spulenanordnung. Hierbei ist die Materialstärke für ein metallisches Gehäuse mit dem nötigen Abstand zum Spulensystem noch nicht mit eingerechnet.

Erfindungsgemäß kommen nur zwei mäanderförmige Spulen zum Einsatz. Es wird nur eine mäanderförmige Sendespule eingesetzt, deren Strom nicht geregelt wird. Eine einzige mäanderförmige Empfangsspule mit entsprechendem Rotationswinkel gegenüber der einen Sendespule würde nun nicht von selbst ein Null-Ausgangssignal erzeugen. Ohne Metalleinfluss würde bei optimalem Rotationswinkel der beiden Spulen zueinander das Ausgangssignal der Empfangsspule zwar Null sein, aber nicht unter Einfluss eines Metalls.

Die genaue Erklärung dazu findet sich in der älteren, nachveröffentlichten deutschen Patentanmeldung DE 10 2012 001 202 A1, deren Inhalt hiermit auch zum Gegenstand der vorliegenden Anmeldung gemacht wird. Der wesentliche Inhalt wird hier im Folgenden an Hand der Figuren 1a, 1b erläutert.

Fig. 1b zeigt die Sendespule 2.6 und die Empfangsspule 2.7 für eine derartige Spulenanordnung. Dabei wird die Sendespule 2.6. zur Unterscheidung von der Empfangsspule 2.7 jeweils gestrichelt dargestellt. Im Wesentlichen werden quer zur Längsrichtung eines Leiters mäandernde, d.h. hin und her laufende Leiterabschnitte zu Windungen von Sendespule 2.6 und Empfangsspule 2.7 gebogen. Die Anzahl n der Mäander ist beliebig und richtet sich nach der verwendeten Spulenausführung. Je höher die Anzahl, umso rotationssymmetrischer wird sich die Spule verhalten. In der Praxis hat sich eine Anzahl von sechs bis zehn Mäandern auf dem Kreisumfang, wie in Fig. 1b dargestellt, z.B. für eine gedruckte Spule als allgemein ausreichend erwiesen. Die weitere Beschreibung geschieht auf Basis einer Spule mit sechs Schleifenabschnitten.

Die Empfangsspule 2,7 kann im Wesentlichen gleich der Sendespule 2.6 aufgebaut sein. Sie wird mit "etwa" 30 Grad Versatz deckungsgleich auf (oder unter) der Sendespule angebracht. Dadurch "empfängt" sie gleich viele Feldlinien unterschiedlicher Richtung, so dass die Sendespule keine induktive Wirkung auf die Empfangsspule ausübt. Ein metallischer Gegenstand vor diesem Spulensystem wird von der Sendespule 2.6 angeregt, während die im Mittelpunkt zu einem großen Teil deckungsgleichen Empfangsspulenbereiche das vom Metallgegenstand ausgesendete Feld ungestört empfangen. Innerhalb der nach innen offenen Mäander der Empfangsspule 2.7 entstehen Feldlinien eines zu den von der Bestromung der Sendespule 2.6 hervorgerufenen Feldlinien invertierten Felds, während sich im Innern der Empfangsspule ein mit den Feldlinien der Sendespule gleichsinniges Feld ausbildet, das die Funktion und damit die Reichweite der Sendespule unterstützt.

Bei einer Verdrehung der Sendespule 2.6 gegenüber der Empfangsspule 2.7 und bei einem getakteten Sendestrom in der Sendespule 5.1 ändert sich die entstehende Spannung in der Empfangsspule. Angefangen bei 0 Grad ergibt sich nur eine Erfassung der Feldlinien, die im Innenbereich der Sendespule 2.6 entstehen. Bei 30 Grad Verdrehung werden zusätzlich die invertierten äußeren Feldlinien erfasst, während die Erfassung der Feldlinien im Innenbereich entsprechend abnimmt. Eine optimale Anordnung der Spulen ist gegeben, wenn sich genau bei 30 °oder bereits bei einem kleinen Winkelbereich vor Erreichen des 30° Versatzes zwischen Sende- und Empfangsspule das Sendesignal in der Empfangsspule 2.7 auslöscht, sich also ein "Null"-Wert ergibt. Der kleine Winkelbereich kann z. B. im Bereich von 0.2 Grad liegen. In dieser Position löschen sich also die Magnetfelder der Sendespule 2.6 in der Empfangsspule 2.7 vollständig aus.

Durch die Wechselwirkung von Sendespule 2.6 und Empfangsspule 2.7 ergibt sich ein örtlicher Punkt optimaler Auslöschung der von der Sendespule ausgesandten Felder in der Empfangsspule. Die Spulen sind dabei so angeordnet, dass die Sendespulenteile bei gleicher Bestromung eine Wirkung auf die wenigstens eine Empfangsspule ausüben, bei der ein örtlicher Punkt der optimalen Auslöschung der ausgesandten Felder in der Empfangsspule entsteht. Dieser örtliche Punkt der optimalen Auslöschung wird nach der nachveröffentlichten Patentanmeldung DE 10 2012 001 202 A1 durch eine Metallannäherung beeinflusst.

Bei einer Anordnung in einer sehr flachen Sensoranordnung in einem wie oben beschriebenen Metallgehäuse (oder mit einer Kupferfläche einer gedruckten Platine), ist ein Metalleinfluss gegeben. In diesem Fall lässt sich auch durch Verändern des Rotationswinkels der beiden Spulen kein Null-Signal erreichen. Daher wird teilweise ein Verfahren verwendet, das in der WO 2012/104086 A1 beschrieben ist, deren Inhalt hiermit auch zum Gegenstand der vorliegenden Erfindung gemacht wird. Im Wesentlichen werden dort die Spulenströme zweier Sendespulen so zueinander geregelt, dass in der Empfangsspule kein Ausgangssignal entsteht. Dazu werden die Phasen des Sendesignals in jeweils zwei Teilbereiche aufgeteilt, die getrennt voneinander in der Amplitude geregelt werden.

In der hier beschriebenen Erfindung wird im Wesentlichen der gleiche Regelalgorithmus zur Null-Signal Erzeugung wie in der WO 2012/104086 A1 eingesetzt, aber anders als in WO 2012/104086 A1, in der die Ströme der Sendespulen geregelt werden, wird hier auf andere Weise ein Null-Ausgangssignal der Empfangsspule erreicht.
Dazu wird von folgender Überlegung ausgegangen:
Das magnetische Wechselfeld einer Sendespule erzeugt in einem metallischen Gegenstand Wirbelströme, die wiederum ein Magnetfeld erzeugen, das mit der Empfangsspule empfangen wird. In der oben beschriebenen Sensoranordnung gemäß Fig. 1a, 1b, 4 erzeugt die metallische Umgebung, das Gehäuse1.1, der gedruckten Spule entsprechend hohe Wirbelströme und daraus entstehende sekundäre Magnetfelder. Diese wiederum erzeugen verhältnismäßig starke Ströme in der Empfangsspule 2.7, die entsprechend ausgewertet werden können.

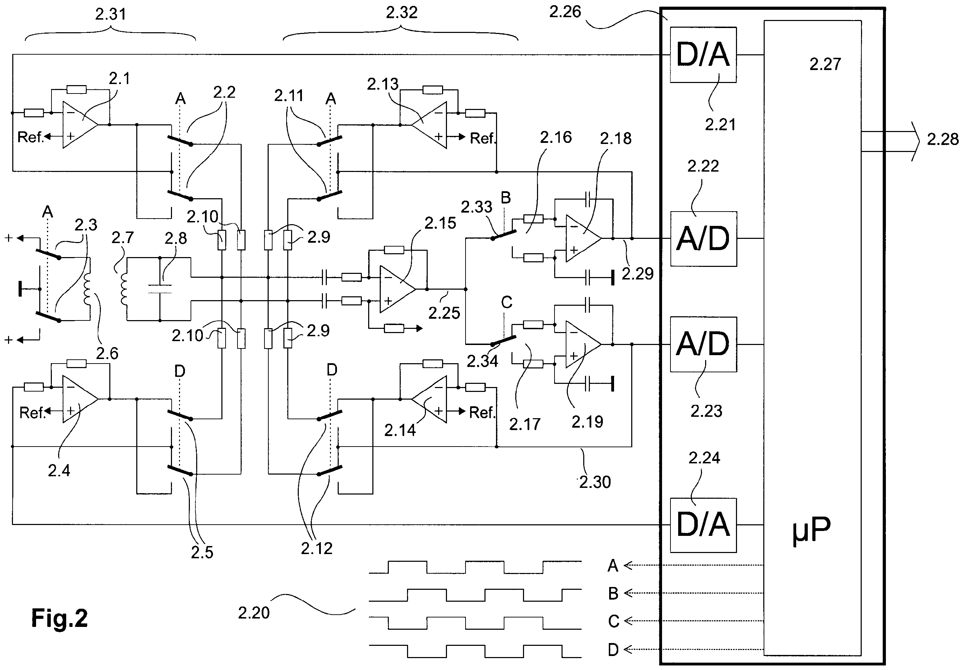

Um ein möglichst sinusförmiges Ausgangssignal zu erhalten, ist die Ausbildung einer Resonanz mittels eines zur Empfangsspule 2.7 parallelen Resonanzkondensators 2.8 gemäß Fig. 2 sinnvoll. In diesem Fall können die durch das sekundäre Magnetfeld entstehenden Ströme leicht durch gegenläufige Ströme kompensiert werden, auch wenn diese Ströme nicht sinusförmigen Verlauf aufweisen. Die gegenläufigen Ströme werden so in der Amplitude geregelt, dass die Empfangsspule 2.7 bzw. der nachgeschaltete Vorverstärker 2.15 kein taktsynchrones Ausgangssignal 2.25 liefert.

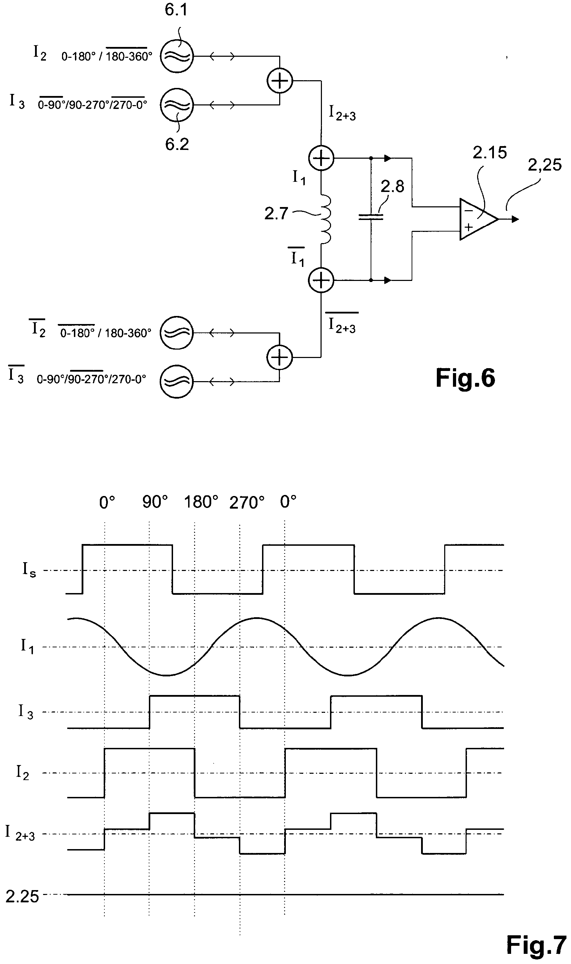

In der Empfangsspule 2.7 entsteht gemäß Fig. 6 bei Metallanwesenheit ein Sendetaktsynchrones Stromsignal I₁. Ziel ist es nun, dieses Empfangssignal vollständig und kontinuierlich zu "Null" zu machen. Dazu werden zwei getrennt voneinander regelbare Ströme I₂ und I₃ der Empfangsspule 2.7 zugeführt. Fig. 6 veranschaulicht symbolisch diesen Schritt. Zur Vereinfachung wird nur die Stromeinspeisung in den ersten, oberen Spulenanschluss betrachtet, die Einspeisung in den zweiten Spulenanschluss erfolgt genau wie beim ersten Spulenanschluss, jedoch mit invertierten Strömen. In einer Schaltungsvariante kann die Einspeisung in den zweiten Spulenanschluss auch weggelassen werden, allerdings verringert sich dadurch der Dynamikbereich des Sensors.

Eine Empfangsspule 2.7 liefert bei Annäherung eines Metalls ein in der Amplitude und Phase von der Metallart abhängiges Stromsignal I₁ in den Vorverstärker 2.15. Im nicht ausgeregelten Zustand, das heißt, die Kompensationsströme I₂ und I₃ sind noch nicht auf ihre SollWerte geregelt, steht daher am Ausgang des Vorverstärkers ein taktsynchrones Ausgangssignal 2.25 an. Mittels in Fig. 2 dargestellten Synchrondemodulatoren 2.16 und 2.17 werden aus dem Ausgangssignal 2.25 Amplituden- und Phaseninformationen gewonnen (s.u.). Mit diesen Informationen werden eine erste getaktete Stromquelle 6.1 mit dem Kompensationsstrom I₂ und eine zweite getaktete Stromquelle 6.2 mit dem Kompensationsstrom I₃ ständig so geregelt, das ein kontinuierliches Null-Ausgangssignal 2.25 erscheint. Das heißt, im Ausgangssignal 2.25 sind keine taktsynchronen Anteile vorhanden. Die Taktsequenz beider Stromquellen 6.1, 6.2 sind um 90° versetzt und beide Stromquellen können positiven bzw. negativen Strom mit beliebigen Werten liefern. Die Information über die Art des Metalls wird aus den beiden Regelgrößen für I₂ und I₃ entnommen.

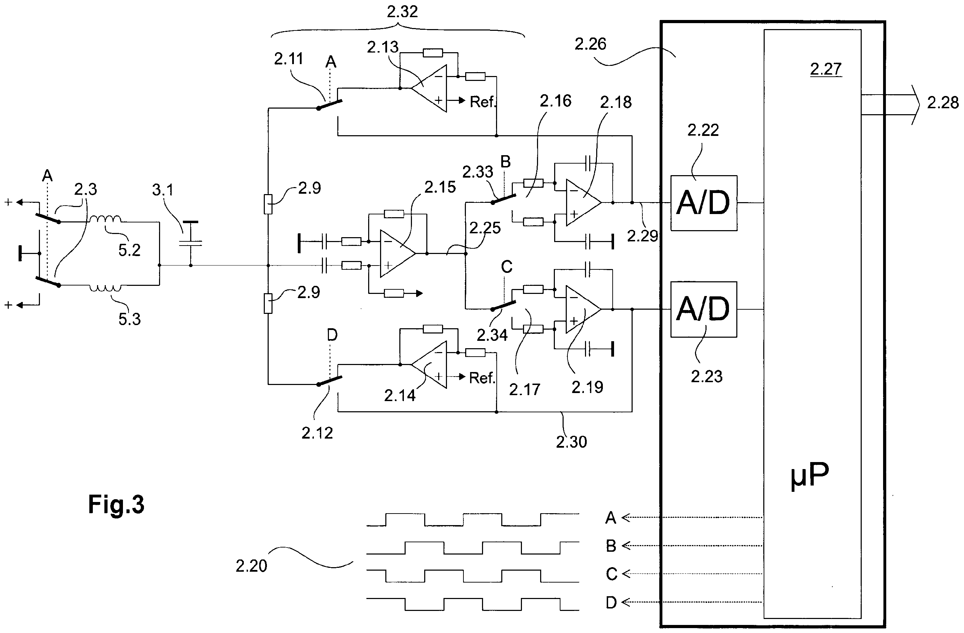

Fig. 7 veranschaulicht diesen Vorgang etwas mehr im Detail: die Sendespule 2.6 wird mit dem Strom I_{S} versorgt. Dabei ist die Phase dieses Stromes I_{S} nicht relevant, sie muss nur einen festen Phasen-Wert gegenüber den Phasen der Kompensationsströme I₂ und I₃ aufweisen. Die Kompensationsströme I₂ und I₃ haben jedoch einen festen Phasenversatz von 90° zueinander. Genauso verhält es sich mit der Phasenlage für die Synchrondemodulatoren 2.16 und 2.17. Sie müssen nur einen festen Phasenversatz von 90° aufweisen, die absolute Phasenlage gegenüber dem Sendetakt ist unwichtig, so lange sie konstant ist. Die Phasenlage 2.20 der Steuersignale A, B, C, D für die Schaltzeiten der Umschalter 2.2, 2.3, 2.5, 2.11, 2.12, 2.33, 2.34 ist dem Grunde nach in den Fig. 2 und 3 rechts unten jeweils verdeutlicht.

Ohne die Kompensationsströme I₂ und I₃ würde sich dann z.B. ein Strom I₁ an der Empfangsspule 2.7 einstellen. Phase und Amplitude sind von der metallischen Umgebung des Spulensystems 2.6 und 2.7 abhängig. Über die bereits erwähnte Synchrondemodulation mit hoch verstärkendem Vergleicher 2.15 wird der Strom I₁ aufgewertet. Somit können die Kompensationsströme I₂ und I₃ entsprechend in der Amplitude geregelt werden. Die addierten Kompensationsströme I₂ und I₃ werden wiederum mit dem Strom am oberen Spulenanschluss der Empfangsspule 2.7 addiert. Durch Variation der Kompensationsströme I₂ und I₃ kann nun ein gemeinsamer Strom I₂+I₃ erzeugt werden, der den Strom der Empfangsspule 2.7 in der Art kompensiert, dass am Ausgang des Vorverstärkers 2.15 ein Ausgangssignal 2.25 ohne taktsynchrone Anteile, also ein "Null"-Signal ansteht.

Die hochfrequenten Spektralanteile der Kompensationsströme - im Ausführungsbeispiel sind es ja rechteckförmige Ströme - stören nicht, da die Kompensationsströme relativ hochohmig (einige K-Ohm) in den Schwingkreis aus Empfangsspule 2.7 und Resonanzkondensator 2.8 eingekoppelt werden. An diesem Schwingkreis bilden sich vorzugsweise sinusförmige Signale aus.

In den hier beschriebenen Ausführungsbeispielen wird mit rechteckförmigen Sende- bzw. Kompensationsströmen gearbeitet. Selbstverständlich kann dieses Verfahren auch mit sinusförmigen Strömen betrieben werden.

Wurde der Empfangsstrom der Empfangsspule 2.7 mit diesem Verfahren zu "Null" kompensiert, so haben die Kompensationsströme I₂ und I₃ bestimmte positive oder negative Werte angenommen. Im beschriebenen Ausführungsbeispiel stehen diese Werte für die metallische Umgebung des Spulensystems, z. B. das metallische Gehäuse 1.1.

Werden diese Werte z.B. mittels AD-Wandler 2.22, 2.23 und Mikroprozessor 2.27 abgespeichert, so kann aus einer weiteren Veränderung der Werte auf eine Metallannäherung geschlossen werden.

Um ergänzend das sich annähernde Metall zu analysieren, kann eine weitere, im Wesentlichen gleichartige Regelung 2.31 weiterer Kompensationsströme eingesetzt werden. Die erste, bisher erläuterte Regelung regelt die Empfangsströme der Empfangsspule 2.7 zu "Null", das heißt, sie regelt den Einfluss des metallischen Gehäuses 1.1 aus. Im nächsten Schritt werden die ermittelten Werte der Kompensationsströme I₂ und I₃ festgehalten, z.B. mittels AD-Wandler 2.22, 2.23 und Mikroprozessor 2.27. Danach kann die weitere Regelung eine Metallannäherung zu "Null" kompensieren, wobei aus den gewonnenen Regelwerten auf die Metallart geschlossen werden kann. Wird nicht so großer Wert auf den Dynamikumfang des Messsystems gelegt, reicht eine einseitige Kompensation des Empfangsstromes aus.

Des Weiteren ist auch ein "Null"-Signal erreichbar, wenn nur ein einziger, in der Amplitude und auch in der Phase geregelter Strom der Empfangsspule 2.7 zugeführt wird. Dabei wird einfach der erste bzw. der zweite Kompensationsstrom durch eine variable Phasenverschiebung des verbleibenden Kompensationsstromes ersetzt. Da dies erfahrungsgemäß in der Praxis etwas umständlicher zu realisieren ist - auf Grund der für eine hohe Auflösung benötigten kleinen Phasenschritte - wird hier auf eine nähere Darstellung verzichtet.

Die genaue Vorgehensweise bei der Regelung wird in Verbindung mit den folgenden Ausführungsbeispielen an Hand der Schaltungen näher erläutert.

Das erste Ausführungsbeispiel gemäß Fig.2 zeigt eine Schaltungsanordnung für die oben beschriebene sehr flache Sensoranordnung. In dieser Schaltung sind vier unabhängige Regelkreise vorgesehen. Für die Grundfunktion können auch nur zwei Regelkreise verwendet werden, die vorteilhafte Verwendung der beiden weiteren Regelkreise erschließt sich am Ende der Beschreibung. Die als erstes beschriebene Regelung mit ihren beiden Regelkreisen ist in Fig. 2 mit 2.32 bezeichnet und dient zum Auslöschen des Einflusses des Gehäuses 1.1.

Die Sendespule 2.6 bekommt einen rechteckförmigen Strom I_{S} aus dem Umschalter 2.3 zur taktweisen Strominvertierung. Der Takt besteht aus mehreren bzw. einer Vielzahl von Taktzyklen, die ihrerseits die Einschaltzeitabschnitte A, D bzw. B, C gemäß Fig. 2 unten umfassen. Selbstverständlich kann als Sendesignal auch ein sinusförmiges Signal verwendet werden.

Eine Empfangsspule 2.7 wird in der Anordnung gemäß Fig. 1b in ihrem Rotationswinkel relativ zur Sendespule 2.6 so angeordnet, dass ein von der Sendespule 2.6 ausgesandtes Signal möglichst in der Empfangsspule 2.7 ausgelöscht wird. Wie bereits beschrieben, kann dies auf Grund der Einflüsse des metallischen Gehäuses 1.1 nicht vollständig geschehen. Die Empfangsspule 2.7 erzeugt also einen taktsynchronen Strom, der als Ausgangssignal 2.25 am Ausgang des Vorverstärkers 2.15 anliegt. Dieses Ausgangssignal 2.25 wird den beiden Synchrondemodulatoren 2.16 und 2.17 zugeführt. Beide Synchrondemodulatoren werden mit einem jeweils um 90° versetzten Takt angesteuert. Das bedeutet, - wie z.B. in Fig. 6 symbolisch dargestellt - dass z.B. der Synchrondemodulator 2.16 das Ausgangssignal 2.25 in den Abschnitten 0-180° eines Taktzyklus dem einen Eingang des hoch verstärkenden Vergleichers 2.18 zuführt, während das Ausgangssignal 2.25 in dem Abschnitt 180-360° dem anderen Eingang zugeführt wird.

Der Vergleicher 2.18 ist als integrierender Vergleicher ausgeführt, so dass die Durchschnittswerte aus den Abschnitten 0°-180° und 180°-360° verglichen werden. Hoch verstärkend bedeutet, dass jede noch so kleine Abweichung der Durchschnittswerte zu einer merklichen Veränderung der Ausgangsspannung führt.

Die Ausgangsspannung des Vergleichers 2.18 wird nun einmal direkt und einmal über den Spannungsinverter 2.13 dem Umschalter 2.11 zur taktweisen Strominvertierung zugeführt. Am Ausgang des Umschalters 2.11 stehen somit zwei in der Polarität entgegengesetzte und von der Ausgangsspannung des Vergleichers 2.18 abhängige taktsynchron getaktete Signale der Regelspannung 2.29 an, die über die Widerstände 2.9 einen Kompensationsstrom I₂ oder I₃ in die Empfangsspule 2.7 leiten. Somit ist die Regelung des Kompensationsstromes für die Taktabschnitte 0-180° und 180°- 360° geschlossen. Der geregelte Kompensationsstrom in diesen Taktabschnitten bewirkt, dass der Durchschnittswert des Empfangssignals der Empfangsspule 2.7 in den Taktabschnitten 0-180° und in den Taktabschnitten 180-360° stets genau gleich groß ist.

Selbstverständlich kann in den Taktabschnitten 90-270° und 270-450° (450°=360° + 90°) ein weiterer taktsynchroner Signalanteil vorhanden sein. Um auch diesen zu "Null" zu machen, wird das Ausgangssignal 2.25 mit einem weiteren Synchrondemodulator 2.17 in den Taktabschnitten 90-270° und 270-450° demoduliert und die demodulierten, den Taktabschnitten zugeordneten Signale werden in einem weiteren hoch verstärkenden Vergleicher 2.19 miteinander verglichen. Der Ausgangswert, die Regelspannung 2.30 wird analog der bereits beschriebenen Schaltung nun einmal direkt und einmal über den Spannungsinverter 2.14 dem Umschalter 2.12 zugeführt und in einen weiteren taktsynchronen Kompensationsstrom umgesetzt und der Empfangsspule 2.7 zugeführt. Somit wird das komplette Empfangssignal der Empfangsspule 2.7 kontinuierlich zu "Null" gemacht.

Die Information über den Metalleinfluss, die im nicht ausgeregelten Zustand des Empfangssignals in der Phase und Amplitude des Empfangssignals vorhanden war, wurde in eine erste Regelspannung 2.29 und eine zweite Regelspannung 2.30 umgewandelt. Beide Regelspannungen werden im Ausführungsbeispiel über die A/D Wandler 2.22 und 2,23 dem Mikroprozessor 2.27 zur weiteren Auswertung zugeführt.

Die beiden Regelspannungen 2.29 und 2.30 repräsentieren die Werte für das metallische Gehäuse 1.1. Sie stellen sozusagen einen festen Offsetwert dar, der in diesem Fall ausgeblendet werden darf. Eine Metallannäherung verändert beide Werte und die Metallannäherung kann daher klar detektiert werden. Im einfachsten Fall werden dazu diese beiden Spannungswerte im Zustand ohne eine weitere Metallannäherung abgespeichert. Eine Veränderung der gemessenen Werte von den abgespeicherten Werten kann nun nicht nur Aufschluss über eine Annäherung von Metall bringen, es kann aus einer Bewertung der Veränderung beider Werte 2.29 und 2.30 auf die Art des Metalls geschlossen werden. Dazu wird das in der WO 2012/104086 A1 näher beschriebene Verfahren eingesetzt.

In der Praxis können so eindeutig verschiedene Aluminiumsorten, Stahlsorten, die Karatzahl von Goldlegierungen oder z.B. die Qualität von Schweißnähten klar unterschieden werden. Die WO 2012/104086 A1 geht von einem Spulensystem ohne metallisches Gehäuse aus. In diesem Fall würden die erste Regelspannung 2.29 und die zweite Regelspannung 2.30 ungefähr gleiche Werte in der Mitte ihres Regelbereiches einnehmen, da keine Kompensationsströme benötigt werden. Anders liegt der Fall bei einem metallischen Gehäuse 1.1 in unmittelbarer Nähe des Spulensystems. Jetzt könnte ein "Offset" durch Metallanwesenheit dazu führen, das die Regelspannungen so weit vom Mittelwert abweichen, dass die Regelspannungsgrenzen nicht mehr weit entfernt sind.

Beispiel: der Regelspannungsmittelwert beträgt ohne Metalleinfluss, also ohne Gehäuse z.B. 2 Volt bei einer Versorgungsspannung des Systems von 4 Volt. 2 Volt bedeutet in diesem Fall, das kein Kompensationsstrom in die Empfangsspule 2.7 eingespeist wird. Mit metallischem Gehäuse ergibt sich dann aber eine Regelspannung von z.B. 3,5 Volt, das heißt, ein relativ "kräftiger" Kompensationsstrom wird in die Empfangsspule 2.7 eingespeist, um ein "Null"-Signal zu erreichen. Eine weitere Metallannäherung könnte nun zu einer "Übersteuerung" der Vergleicher 2.18 bzw. 2.19 führen. Natürlich kann in diesem Fall eine Verringerung der Widerstandswerte der Widerstände 2.9 dem entgegenwirken, was aber zu einer möglichen Verringerung der Auflösung aufgrund der beschränkten Schrittweite der A/D Wandler führen kann. Um dies im Ausführungsbeispiel zu verhindern, wird eine zweite Kompensationsstromregelung 2.31 vorgesehen, die im Wesentlichen wie die Kompensationsstromregelung 2.32 ausgeführt ist.

Die Kompensationsstromregelung 2.31 regelt z.B. nach Inbetriebnahme der Sensoreinheit die Gehäuseeinflüsse des metallischen Gehäuses 1.1 aus. Dazu werden die durch die Synchrondemodulatoren 2.16 und 2.17 gewonnenen Werte in der Auswerteeinheit 2.26 mit den A/D Wandlern 2.22 und 2.23 erfasst und im Mikroprozessor 2.27 mit einem festen Wert, z.B. dem Spannungswert "Ref" verglichen. Dass während dieser Zeit kein weiteres Metall anwesend sein sollte, versteht sich von selbst.

Über die D/A Wandler 2.21, 2.24 werden nun die Kompensationsströme der Regelung 2.31 in den Phasen 0-180° und 90-270° so in ihrer Amplitude verändert, bis die Regelspannungen 2.29 und 2.30 einen Wert annehmen, bei der kein Kompensationsstrom über die Widerstände 2.9 fließt. Dies entspricht im Ausführungsbeispiel dem Zustand, wenn die Regelspannungen 2.29 und 2.30 den Spannungswert "Ref" erreichen. Nach erfolgter Ausregelung der Kompensationsstromwerte bei dadurch entstandenem "Null"-Ausgangssignal 2.25 werden die Werte der D/A Wandler 2.21, 2.24 im Mikroprozessor 2.27 festgehalten, das heißt, gespeichert und die gespeicherten Werte werden ab jetzt als fester Kompensationsstromwert über die Widerstände 2.10 der Empfangsspule 2.7 zugeführt. Auch in dieser Kompensationsregelung sind Spannungsinverter 2.1, 2.4 für die Umschalter 2.2, 2.5 vorgesehen. Die Regelung 2.31 hat also die "Ausblendung" des metallischen Gehäuses durchgeführt. Die so einmalig ermittelten Regelwerte werden im Wesentlichen während der weiteren Messung bzw. Analyse von sich dem Sensor nähernden Metallgegenständen nicht mehr verändert.

Eine Annäherung von Metall an die Sensoreinheit ruft eine Änderung der Regelspannungen 2.29 und 2.30 hervor. In diesem Fall wird die Veränderung jedoch aus der Mitte des Regelspannungsbereiches gestartet. Das bedeutet, der gesamte Dynamikbereich der Sensoreinheit steht für die Metallanalyse zur Verfügung. Dies ist sinnvoll, da sich je nach Metallart die Regelspannungen von der Mitte aus in beide Richtungen bewegen können. Gleichzeitig kann die Empfindlichkeit erhöht werden, da die Widerstände 2.9 hochohmiger als die Widerstände 2.10 ausgeführt werden können. Der Kompensationsstrom wird dadurch nur in einem geringen Umfang zugelassen, was wiederum zu großen Veränderungen der Regelspannungen 2.29 und 2.30 bei noch relativ weit entfernten Metallgegenständen führt. Die Veränderung der Regelspannungen bei Metallannäherung wird über die A/D Wandler 2.22 und 2.23 an den Mikroprozessor 2.27 der Auswerteeinheit 2.26 gegeben, der sie entsprechend auswertet und die Ausgangsdaten 2.28 z.B. einem Display zuleitet. Die Auswertung zur Analyse der detektierten Metallgegenstände bzw. Ausblendung ausgewählter Gegenstände wurde bereits in der WO 2012/104086 A1 näher beschrieben.

Ein weiteres Ausführungsbeispiel der oben beschriebenen Schaltung zeigt Fig. 3. In diesem Fall wurde keine mäanderförmige Spule verwendet, sondern einfach gewickelte oder gedruckte Spulen in einem stabförmigen Sensorsystem wie in Fig. 5 dargestellt. Dies bedeutet aber nicht, das nicht auch anders geformte Spulen verwendet werden können. Mit einem solchen stabförmigen Sensorelement 5.1 mit beispielsweise 3 mm Durchmesser kann z.B. leicht eine Analyse der Metallstruktur an schwer zugänglichen Schweißnähten durchgeführt werden. Bei solch einem kleinen Durchmesser lässt sich eine mäanderförmige Spule nur schwer realisieren. Darum wird im Ausführungsbeispiel der Fig.5 im Gehäuse des Sensorelementes 5.1 eine leicht zu fertigende einfache Spule als Detektionsspule 5.2 verwendet. Eine gleichartige Spule befindet sich als Referenzspule 5.3 vorzugsweise im gleichen Gehäuse 5.1. Die Spulen können selbstverständlich auch mit Ferritkern oder Ferritschalenkern ausgestattet sein, dies ist aber nicht zwingend notwendig.

Fig. 3 zeigt die einfache Anbindung der Spulen 5.2 und 5.3 an die Elektronik. Der Umschalter 2.3 zur taktweisen Strominvertierung liefert eine rechteckförmige Ausgangsspannung an einem seiner beiden Ausgänge, während der andere Ausgang den gleichen Takt, nur invertiert, liefert. An jedem der beiden Ausgänge ist jeweils eine Spule angeschlossen, deren andere Enden zusammengelegt sind. Auf beide Spulen wirkt der Resonanzkondensator 3.1.

Ohne Metallannäherung an eine der beiden Spulen 5.2 oder 5.3 bildet sich am Resonanzkondensator 3.1 keine Spannung aus. Die Spannungen, bzw. Ströme aus dem Umschalter 2.3 sind ja jeweils invertiert, so das sich zwar die Stromrichtung in den Spulen taktweise ändert, jedoch heben sich die Spannungen am zusammengelegten Ende der Spulen, also am Resonanzkondensator 3.1 auf. Eine der beiden Spulen wird nun als Detektionsspule 5.2 ausgebildet, indem sie an der Front des stabförmigen Sensorelementes 5.1 angebracht wird. Die andere baugleiche Spule befindet sich als Referenzspule 5.3 in einigem Abstand dazu. Beide Spulen senden und empfangen zeitgleich, das heißt, Senden und Empfangen geschehen im gleichen Augenblick mit der gleichen Spule.

Nähert sich Metall der Detektionsspule 5.2, bilden sich im Metall aufgrund der magnetischen Felder Wirbelströme aus, die wiederum auf die "sendende" Detektionsspule 5.2 zurückwirken und dort einen Strom hervorrufen. Der Umschalter 2.3 schaltet im Ausführungsbeispiel die Spannung an den Spulen niederohmig, indem er z.B. seinen Ausgang taktsynchron wechselseitig an Masse und Versorgungsspannung schaltet. Somit kann sich hier keine zusätzliche Spannung ausbilden. Da jedoch auf Grund der niederohmigen Anbindung der Strom aus dem zurückwirkenden Magnetfeld nahezu ungehindert fließen kann, bildet dieser Strom am Resonanzkondensator 3.1 eine taktsynchrone Signalspannung aus.

Mittels der bereits beschriebenen Kompensationsstromregelung 2.32 kann nun diese Signalspannung zu "Null" geregelt und können die Werte der Regelspannungen 2.29, 2.30 wie im ersten Ausführungsbeispiel erläutert ausgewertet werden.

Selbstverständlich können bedarfsweise auch die Ströme aus dem Umschalter 2.3 entsprechend geregelt werden, in dem z.B. die Kompensationsströme nicht auf den gemeinsamen Resonanzkondensator 3.1 wirken, sondern getrennt auf die Seiten der Spulen, die in Fig. 3 am Umschalter angeschlossen sind. Diese Art der Stromregelung ist im Wesentlichen schon in der WO 2012/104086 A1 beschrieben.

### Bezugszeichenliste

- 1.1: Gehäuse
- 1.2: Spulenanordnung
- 1.3: Detektionsbereich
- 1.4: Mittelachse
- 2.1,2.4: Spannungsinverter
- 2.2, 2.3, 2.5, 2.11, 2.12, 2.33, 2.34: Umschalter zur taktweisen Strominvertierung
- 2.6: Sendespule mit dem Sendestrom Iₛ
- 2.7: Empfangsspule
- 2.8: Resonanzkondensator
- 2.9, 2.10: Widerstände zur Stromeinspeisung
- 2.13, 2.14: Spannungsinverter
- 2.15: Vorverstärker
- 2.16, 2.17: Synchrondemodulator
- 2.18, 2.19: Hochverstärkender Vergleicher
- 2.20: Phasenlage der Steuersignale A, B, C, D
- 2.21, 2.24: Digital-Analog-Wandler
- 2.22, 2.23: Analog-Digital-Wandler
- 2.25: Ausgangssignal des Vorverstärker 2.15
- 2.26: Auswerteeinheit
- 2.27: Mikroprozessor (µP)
- 2.28: Ausgangsdaten des µP
- 2.29: erste Regelspannung
- 2.30: zweite Regelspannung
- 2.31: erste Kompensationsstromregelung
- 2.32: zweite Kompensationsstromregelung
- 3.1: erste Sende/Empfangsspule
- 3.2: zweite Sende/Empfangsspule
- 4.4: Abstandselement
- 4.5: D = Dicke des Sensorelementes 1.1
- 5.1: Stabförmiges Sensorelement
- 5.2: Detektionsspule eines stabförmigen Sensorelementes
- 5.3: Referenzspule eines Stabförmigen Sensorelementes
- 6.1, 6.2: getaktete Stromquelle
- I₁: Strom der Empfangsspule
- I₂: erster Kompensationsstrom
- I₃: zweiter Kompensationsstrom
- I_{S}: Sendestrom

## Patentansprüche

1. Verfahren zur Ortung und/oder Erkennung metallischer oder Metall enthaltender Objekte und Materialien, mit einer Spulenanordnung (1.2), in der eine Sendespule (2.6) und eine Empfangsspule (2.7, 5.2) übereinander angeordnet werden, wobei die Empfangsspule ein Empfangsspulenausgangssignal (2,25) erzeugt,
mit einer geschlossenen Kompensationsregelung des Empfangsspulenausgangssignal zur Kompensation von im Detektionsbereich der Empfangsspule auftretenden, die Empfangsspule beeinflussenden Änderungen in der Empfangsspule,
**dadurch gekennzeichnet, dass** Kompensationsströme (I₂, I₃) in den Empfangszweig der Empfangsspule (2.7, 5.2) eingespeist werden und so mittels Regelwerten (Regelspannungen 2.29, 2.30) zueinander geregelt werden, dass das Empfangsspulenausgangssignal (2.25) oder aus dem Empfangsspulenausgangssignal (2.25) nach Demodulation erfasste Durchschnittswerte (2,29, 2,30) zueinander kontinuierlich auch bei Metalleinfluss zu Null geregelt werden, und
dass die Regelwerte ausgewertet werden, um Objekte und Materialien zu orten und/oder zu erkennen.

2. Verfahren nach Anspruch 1, **dadurch gekennzeichnet, dass** die Kompensationsströme (I2, I3) unmittelbar in die Empfangsspule (2.7, 5.2) eingespeist werden.

3. Verfahren nach Anspruch 1 oder 2, **dadurch gekennzeichnet, dass** Sendespule (2.6) und Empfangsspule (2.7) in einer gedruckten Schaltung aufgebracht sind.

4. Verfahren nach einem der vorhergehenden Ansprüche, **dadurch gekennzeichnet, dass** die flächige Sendespule (2.6) mit der flächigen Empfangsspule (2.7) in einem metallischen Gehäuse (1.1) quer zur Flächenerstreckung der Spulen eingebracht wird, wobei sich ein sich vom Gehäuse (1.1) einseitig, quer zur Fächenerstreckung der Spulen weg erstreckendes, elektrisches Feld als Detektionsbereich (1.3) ausbildet, wobei vorzugsweise die flächige Sendespule (2.6) und die flächige Empfangsspule (2.7) mäanderförmig geformt werden.

5. Verfahren nach Anspruch 4, **dadurch gekennzeichnet, dass** das metallische Gehäuse (1.1) durch wenigstens eine auf einer Seite der Spulen angeordnete, metallische Beschichtung der Platine der gedruckten Schaltung ersetzt ist.

6. Verfahren nach einem der vorhergehenden Ansprüche, **dadurch gekennzeichnet, dass** die Spulenanordnung ohne Ferritkern ausgestaltet wird.

7. Verfahren nach einem der vorhergehenden Ansprüche, **dadurch gekennzeichnet, dass** der Mittelwert eines demodulierten Signals in einer ersten Demodulationsphase im ausgeregelten Zustand im Wesentlichen gleichgroß dem Mittelwert einer zweiten Demodulationsphase des demodulierten Signals ist und dass eine eventuell bestehende Differenz der demodulierten Signale zwischen den beiden Demodulationsphasen zueinander mittels der Regelwerte ausgeregelt wird.

8. Verfahren nach Anspruch 7, **dadurch gekennzeichnet, dass** die Kompensationsregelung eine erste Kompensationsregelung und eine zweite Kompensationsregelung umfasst und dass die erste Kompensationsregelung eine Kompensation bei einer Phasenlage von 0° und 180° durchführt, während die zweite Kompensationsregelung eine Kompensation bei 90° und 270° durchführt, wobei die Kompensationsregelung zu einer Regelung des Empfangssignals in der Empfangsspule (2.7) zu Null führt.

9. Verfahren nach einem der vorhergehenden Ansprüche, **dadurch gekennzeichnet, dass** eine erste Ermittlung von Regelwerten bei einer Kompensationsregelung bei Vorhandensein eines metallischen Gehäuses (1.1) oder wenigstens einer metallischen Beschichtung der Sensoreinheit durchgeführt wird und dass die dabei ermittelten Regelwerte, die dazu führen, dass das Empfangssignal in der Empfangsspule (2.7) ohne weitere Metallannäherung zu einem Nullsignal wird, zur Ausblendung des metallischen Gehäuses (1.1) oder der metallischen Beschichtung abgespeichert und bei einer weiteren Ortung und/oder Erkennung metallischer oder Metall enthaltender Objekte und Materialien verwendet werden, sodass eine Ortung und/oder Erkennung metallischer oder Metall enthaltender Objekte und Materialien unter Verwendung einer weiteren Kompensationsregelung mit denselben Regelalgorithmen möglich ist.

10. Sensoreinheit zur Ortung und/oder Erkennung metallischer oder Metall enthaltender Objekte und Materialien, mit einer Spulenanordnung (1.2), in der eine Sendespule (2.6) und eine Empfangsspule (2.7) übereinander angeordnet sind, wobei die Empfangsspule ein Empfangsspulenausgangssignal (2,25) erzeugt,
mit einer geschlossenen Kompensationsregelung des Empfangsspulenausgangssignal (2.25) zur Kompensation von im Detektionsbereich der Empfangsspule auftretenden, die Empfangsspule beeinflussenden Änderungen in der Empfangsspule (2.7),
**dadurch gekennzeichnet, dass** Kompensationsströme (I₂, I₃) in den Empfangszweig der Empfangsspule (2.7, 5.2) eingespeist werden und so mittels Regelwerten (Regelspannungen 2.29, 2.30) zueinander geregelt werden, dass das Empfangsspulenausgangssignal (2.25) oder aus dem Empfangsspulenausgangssignal (2.25) nach
Demodulation erfasste Durchschnittswerte (2,29, 2,30) zueinander kontinuierlich auch bei Metalleinfluss zu Null geregelt werden, sowie
mit einer Auswerteeinheit (2.26), die die Regelwerte auswertet, um Objekte und Materialien zu orten und/oder zu erkennen.

11. Sensoreinheit nach Anspruch 10, **dadurch gekennzeichnet, dass** die Kompensationsströme (I2, I3) unmittelbar in die Empfangsspule (2.7, 5.2) eingespeist sind.

12. Sensoreinheit nach Anspruch 10 oder 11, **dadurch gekennzeichnet, dass** Sendespule (2.6) und Empfangsspule (2.7) durch eine gedruckte Schaltung gebildet sind.

13. Sensoreinheit nach einem der Ansprüche 10 bis 12, **dadurch gekennzeichnet, dass** die flächige Sendespule (2.6) mit der flächigen Empfangsspule (2.7) in einem metallischen Gehäuse (1.1) quer zur Flächenerstreckung der Spulen angeordnet ist, wobei sich ein sich vom Gehäuse (1.1) einseitig, quer zur Fächenerstreckung der Spulen weg erstreckendes, elektrisches Feld als Detektionsbereich (1.3) ausbildet.

14. Sensoreinheit nach Anspruch 13, **dadurch gekennzeichnet, dass** das metallische Gehäuse (1.1) durch wenigstens eine auf einer Seite der Spulen angeordnete, metallische Beschichtung der Platine der gedruckten Schaltung ersetzt ist.

15. Sensoreinheit nach einem der Ansprüche 10 bis 14, **dadurch gekennzeichnet, dass** die Spulenanordnung (1.2) ferritfrei ist und einen nur einseitigen Detektionsbereich (1.3) aufweist.

16. Sensoreinheit nach einem der Ansprüche 10 bis 15, **dadurch gekennzeichnet, dass** Sendespule (2.6) und Empfangsspule (2.7) quer zur Umfangsrichtung der Spulenwindungen hin- und herlaufende, mäanderförmige Leiterwindungen sowie eine im Wesentlichen identische Bauform aufweisen, wobei Sendespule (2.6) und Empfangsspule (2.7) aufeinander liegen und mehrere symmetrisch angeordnete, überlappende Bereiche ausbilden, wobei vorzugsweise n Mäander in gleichmäßigem Zentriwinkel-Abstand entlang des Umfangs von Sendespule (2.6) und Empfangsspule (2.7) angeordnet sind und die Spulen um einen Winkel von etwa 360°/(n * 2) verdreht zueinander angeordnet sind.

17. Sensoreinheit nach einem der der Ansprüche 10 bis 16, **dadurch gekennzeichnet, dass** sie eine Detektionsspule (5.2) und eine Referenzspule (5.3) aufweist, die beide gleichzeitig senden und empfangen, wobei sie vorzugsweise in einem stabförmigen Sensorelement (5.1) vorzugsweise in Stabrichtung hintereinander angeordnet sind.

## Claims

1. Method for locating and/or identifying metallic or metal-containing objects and materials, comprising a coil arrangement (1.2) in which a transmission coil (2.6) and a reception coil (2.7, 5.2) are arranged over one another, wherein the reception coil generates a reception coil output signal (2.25),
comprising a closed-loop compensation regulation of the reception coil output signal for compensation of changes in the reception coil, said changes occurring in the detection region of the reception coil and influencing the reception coil,
**characterised in that** compensation currents (I₂, I₃) are fed into the receiving branch of the reception coil (2.7, 5.2) and are regulated relative to one another by means of regulating values (regulating voltages 2.29, 2.30) such that the reception coil output signal (2.25) or average values (2.29, 2.30) acquired from the reception coil output signal (2.25) after demodulation are continuously regulated to zero relative to one another, even under the influence of a metal, and
that the regulating values are evaluated in order to locate and/or identify objects and materials.

2. Method according to claim 1, **characterised in that** the compensation currents (I₂, I₃) are fed directly into the reception coil (2.7, 5.2).

3. Method according to claim 1 or 2, **characterised in that** the transmission coil (2.6) and the reception coil (2.7) are arranged in a printed circuit.

4. Method according to one of the preceding claims, **characterised in that** the flat transmission coil (2.6) is arranged in a metallic housing (1.1) with the flat reception coil (2.7) transversely to the areal extent of the coils, wherein an electric field forms as the detection region (1.3) extending on one side from the housing (1.1), transversely away from the areal extent of the coils, wherein preferably the flat transmission coil (2.6) and the flat reception coil (2.7) are in the form of meanders.

5. Method according to claim 4, **characterised in that** the metallic housing (1.1) is replaced by at least one metallic coating of the circuit board of the printed circuit, said coating being arranged on one side of the coils.

6. Method according to one of the preceding claims, **characterised in that** the coil arrangement is provided without a ferrite core.

7. Method according to one of the preceding claims, **characterised in that** the average value of a demodulated signal in a first demodulation phase in the stabilised state is substantially the same size as the average value of a second demodulation phase of the demodulated signal and that a possibly existing difference of the demodulated signals to one another between the two demodulation phases is regulated out.

8. Method according to claim 7, **characterised in that** the compensation regulation comprises a first compensation regulation and a second compensation regulation and that the first compensation regulation carries out a compensation at a phase position of 0° and 180°, whilst a second compensation regulation carries out a compensation at 90° and 270°, wherein the compensation regulation leads to a regulation of the reception signal in the reception coil (2.7) to zero.

9. Method according to one of the preceding claims, **characterised in that** a first determination of control values for a compensation regulation in the presence of a metallic housing (1.1) or at least a metallic coating of the sensor unit is carried out and **in that** the control values determined therein which lead to the reception signal in the reception coil (2.7) becoming a zero signal in the absence of further metallic approach are stored for the masking out of the metallic housing (1.1) or the metallic coating and, on further location and/or identification of metallic or metal-containing objects and materials, are used so that a location and/or identification of metallic or metal-containing objects and materials is possible while using a further compensation regulation with the same regulation algorithms.

10. Sensor unit for locating and/or identifying metallic or metal-containing objects and materials, comprising a coil arrangement (1.2) in which a transmission coil (2.6) and a reception coil (2.7) are arranged over one another, wherein the reception coil generates a reception coil output signal (2.25),
comprising a closed-loop compensation regulation for the reception coil output signal (2.25) for compensation of changes in the reception coil (2.7), said changes occurring in the detection region of the reception coil and influencing the reception coil,
**characterised in that** compensation currents (I₂, I₃) are fed into the receiving branch of the reception coil (2.7, 5.2) and are regulated relative to one another by means of regulating values (regulating voltages 2.29. 2.30) such that the reception coil output signal (2.25) or average values (2.29, 2.30) detected from the reception coil output signal (2.25) after demodulation are continuously regulated to zero relative to one another, even under metal influence, and
comprising an evaluation unit (2.26) evaluating the regulating values in order to locate and/or identify objects and materials.

11. Sensor unit according to claim 10, **characterized in that** the compensation currents (I₂, I₃) are fed directly into the reception coil (2.7, 5.2).

12. Sensor unit according to claim 10 or 11, **characterised in that** the transmission coil (2.6) and the reception coil (2.7) are formed in a printed circuit.

13. Sensor unit according to one of the claims 10 to 12, **characterised in that** the flat transmission coil (2.6) is arranged in a metallic housing (1.1) with the flat reception coil (2.7) transversely to the areal extent of the coils, wherein an electric field forms as the detection region (1.3) extending on one side from the housing (1.1), transversely away from the areal extent of the coils.

14. Method according to claim 13, **characterised in that** the metallic housing (1.1) is replaced by at least one metallic coating of the circuit board of the printed circuit, said coating being arranged on one side of the coils.

15. Sensor unit according to one of the claims 10 to 14, **characterised in that** the coil arrangement (1.2) is ferrite-free and has a detection region (1.3) on one side only.

16. Sensor unit according to one of the claims 10 to 15, **characterised in that** the transmission coil (2.6) and the reception coil (2.7) comprise meandering conductor windings extending back and forth transversely to the peripheral direction of the coil windings and a substantially identical construction, wherein the transmission coil (2.6) and the reception coil (2.7) lie on top of each other such that a plurality of symmetrically arranged overlapping regions are formed, wherein preferably n meanders are arranged in an even central angle spacing along the periphery of the transmission coil (2.6) and the reception coil (2.7) and **in that** the coils are arranged rotated at an angle of approximately 360°/(n*2) to one another.

17. Sensor unit according to one of the claims 10 to 16, **characterised in that** it comprises a detection coil (5.2) and a reference coil (5.3) both of which simultaneously transmit and receive, wherein the coils are preferably arranged one behind the other in a rodshaped sensor element (5.1), preferably in the rod direction.

## Revendications

1. Procédé de détection et/ou de reconnaissance d'objets et matériaux métalliques ou contenant du métal, avec un dispositif à bobines (1,2), dans lequel une bobine d'émission (2.6) et une bobine de réception (2.7, 5.2) sont disposées l'une au-dessus de l'autre, la bobine de réception produisant un signal de sortie de bobine de réception (2,25),
avec un réglage de compensation fermé du signal de sortie de bobine de réception pour compenser des modifications dans la bobine de réception se produisant dans la zone de détection de la bobine de réception et influençant la bobine de réception,
**caractérisé en ce que** des courants de compensation (I₂, I₃) sont appliqués dans la branche de réception de la bobine de réception (2.7, 5.2) et sont ainsi réglés l'un par rapport à l'autre au moyen de valeurs de réglage (tensions de réglage 2.29, 2.30), **en ce que** le signal de sortie de bobine de réception (2.25) ou des valeurs moyennes (2,29, 2,30) obtenues à partir du signal de sortie de bobine de réception par démodulation sont réglées à zéro les unes par rapport aux autres continuellement également en cas d'influence métallique, et
**en ce que** les valeurs de réglage sont exploitées pour détecter et/ou reconnaître des objets ou des matériaux.

2. Procédé selon la revendication 1, **caractérisé en ce que** les courants de compensation (12, 1.3) sont directement appliquées dans la bobine de réception (2.7, 5.2).

3. Procédé selon la revendication 1 ou 2, **caractérisé en ce que** la bobine d'émission (2.6) et la bobine de réception (2.7) sont utilisées dans un circuit imprimé.

4. Procédé selon l'une des revendications précédentes, **caractérisé en ce que** la bobine d'émission plane (2.6) est introduite avec la bobine de réception plane (2.7) dans un logement métallique (1.1) perpendiculairement à l'extension de surface des bobines, un champ électrique, s'étendant unilatéralement à partir du logement (1.1), perpendiculairement à l'extension de surface des bobines, se formant en tant que zone de détection (1.3), la bobine d'émission plane (2.6) et la bobine de réception plane (2.7) étant de préférence réalisées sous forme de méandres.

5. Procédé selon la revendication 4, **caractérisé en ce que** le logement métallique (1.1) est remplacé par au moins un revêtement métallique de la platine du circuit imprimé disposé sur un côté des bobines.

6. Procédé selon l'une des revendications précédentes, **caractérisé en ce que** le dispositif à bobines est réalisé sans noyau de ferrite.

7. Procédé selon l'une des revendications précédentes, **caractérisé en ce que** la valeur moyenne d'un signal démodulé est dans une première phase de démodulation à l'état réglé essentiellement égale à la valeur moyenne d'une deuxième phase de démodulation du signal démodulé et **en ce qu'**une différence éventuelle des signaux démodulés l'un par rapport à l'autre entre les deux phases de démodulation est réglée au moyen des valeurs de réglage.

8. Procédé selon la revendication 7, **caractérisé en ce que** le réglage de compensation comprend un premier réglage de compensation et un second réglage de compensation et **en ce que** le premier réglage de compensation effectue une compensation lors d'une position de phase de 0° et 180°, tandis que le deuxième réglage de compensation effectue une compensation de 90° et de 270°, le réglage de compensation conduisant à un réglage à zéro du signal de réception dans la bobine de réception (2.7).

9. Procédé selon l'une des revendications précédentes, **caractérisé en ce que** la première détermination des valeurs de réglage est effectuée lors d'un réglage de compensation en présence d'un logement métallique (1.1) ou d'au moins un revêtement métallique de l'unité de détection et **en ce que** les valeurs de réglage ainsi obtenues, qui ont pour effet que le signal de réception dans la bobine de réception (2.7) devient un signal nul sans approche métallique supplémentaire, sont enregistrées pour le masquage du logement métallique (1.1) ou du revêtement métallique et utilisés lors d'une autre détection et/ou d'une autre reconnaissance d'objets et de matériaux métalliques ou contenant du métal, de sorte qu'une détection et/ou une reconnaissance d'objets et de matériaux métalliques ou contenant du métal est possible en utilisant un autre réglage de compensation avec les mêmes algorithmes de réglage.

10. Unité de détection pour la détection et/ou la reconnaissance d'objets et matériaux métalliques ou contenant du métal, avec une dispositif à bobines (1.2), dans lequel sont disposées une bobine d'émission (2.6) et une bobine de réception (2.7) l'une au-dessus de l'autre, la bobine de réception produisant un signal de sortie de bobine de réception (2,25), avec un réglage de compensation fermé du signal de sortie de bobine de réception (2.25) pour compenser des modifications dans la bobine de réception (2.7) se produisant dans la zone de détection de la bobine de réception et influençant la bobine de réception,
**caractérisé en ce que** des courants de compensation (I₂, I₃) sont appliqués dans la branche de réception de la bobine de réception (2.7, 5.2) et sont ainsi réglés l'un par rapport à l'autre au moyen de valeurs de réglages (tensions de réglage 2.29, 2.30), **en ce que** le signal de sortie de bobine de réception (2.25) ou des valeurs moyennes obtenues (2,29, 2,30) à partir du signal de sortie de bobine de réception (2.25) après démodulation sont réglées à zéro les unes par rapport aux autres continuellement également en cas d'influence métallique, et
avec une unité d'exploitation (2.26), qui exploite les valeurs de réglage, pour détecter et/ou reconnaître des objets et des matériaux.

11. Unité de détection selon la revendication 10, **caractérisée en ce que** les courants de compensation (12, 13) sont appliqués directement dans la bobine de réception (2.7, 5.2).

12. Unité de détection selon la revendication 10 ou 11, **caractérisée en ce que** la bobine d'émission (2.6) et la bobine de réception (2.7) sont formées par un circuit imprimé.

13. Unité de détection selon l'une des revendications 10 à 12, **caractérisée en ce que** la bobine d'émission plane (2.6) est disposée perpendiculairement à l'extension de surface des bobines avec la bobine de réception plane (2.7) dans un logement métallique (1.1), un champ électrice se formant comme zone de détection (1.3) en s'étendant à partir du logement (1.1) unilatéralement, perpendiculairement à l'extension de surface des bobines.

14. Unité de détection selon la revendication 13, **caractérisée en ce que** le logement métallique (1.1) est remplacé par au moins un revêtement métallique de la platine du circuit imprimé, disposé sur un côté des bobines.

15. Unité de détection selon l'une des revendications 10 à 14, **caractérisée en ce que** le dispositif à bobines (1.2) est exempt de ferrite et présente une zone de détection (1.3) uniquement unilatérale.

16. Unité de détection selon l'une des revendications 10 à 15, **caractérisée en ce que** la bobine d'émission (2.6) et la bobine de réception (2.7) présentent, perpendiculairement à la circonférence des enroulements de bobine, des enroulements conducteurs formant dans un sens et dans l'autre des méandres, ainsi qu'une structure essentiellement identique, la bobine d'émission (2.6) et la bobine de réception (2.7) étant l'une sur l'autre et formant plusieurs zones disposées symétriquement et se superposant, n méandres étant de préférence disposés à distance égale par rapport au centre le long de la circonférence de la bobine d'émission (2.6) et de la bobine de réception (2.7) et les bobines étant disposées l'une par rapport à l'autre avec un décalage angulaire d'un angle d'environ 360°/(n * 2).

17. Unité de détection selon l'une des revendications 10 à 16, **caractérisée en ce qu'**elle présente une bobine de détection (5.2) et une bobine de référence (5.3), lesquelles émettent et reçoivent en même temps et sont disposées de préférence dans un élément de détection en forme de bâton (5.1) de préférence l'une derrière l'autre dans la direction du bâton.
